# EUROPEAN PATENT APPLICATION

(11) **EP 1 069 366 A1**
(43) Date of publication of application: **17.01.2001**
(21) Application number: 00830056.8
(22) Date of filing: 28.01.2000
(51) Int. Cl.: F16L 41/08, F25B 41/06, F25B 41/00

(54) **Pipe connection device for a thermostatic expansion valve**

(30) Priority: 16.07.1999 JP 532899
(71) Applicant: S.K.G. Italiana S.p.A., 43100 Scarzara (Parma) (IT)
(72) Inventor: Masuhara, Hiroaki, Hachioji-shi, Tokyo 193-0942 (JP); Sendou, Isao, Hachioji-shi, Tokyo 193-0942 (JP); Kawakami, Satoru, Hachioji-shi, Tokyo 193-0942 (JP); Bernini, Michele, 43100 Parma (IT)
(74) Representative: Gotra, Stefano

(57) **Abstract**

A pipe connection device is provided for a thermostatic expansion valve used in an automotive air conditioning system.

An expansion valve (1) has a refrigerant outlet (6) and a refrigerant inlet (7) formed in a flat surface (5) of a housing (3) thereof and also has through holes (9) formed in the flat surface for fixing the housing. A first pipe (11) connected to the refrigerant outlet (6) has an end provided with a first plate (21) having a joint surface (22) surrounding the outer periphery thereof and with a stopper piece (23) formed at one end of the first plate and having a small hole (24), and a first threaded hole (26) is formed close to the refrigerant outlet (6). A second pipe (15) connected to the refrigerant inlet (7) has an end provided with a second plate (21a) having a joint surface (22a) surrounding the outer periphery thereof and with a stopper piece (23a) formed at one end of the second plate and having a small hole (24a), and a second threaded hole (26a) is formed close to the refrigerant inlet (7). A mounting screw is inserted through the small hole of the first plate and screwed into the first threaded hole, and another mounting screw is inserted through the small hole of the second plate and screwed into the second threaded hole, thereby mounting the plates separately to the flat surface.

## Description

The device relates to a pipe connection device for a thermostatic expansion valve used in an automotive air conditioning system or the like.

This type of expansion valve is used, for example, in an automotive cooling system in which refrigerant gas is sucked in and compressed by a compressor (not shown) and the resulting high-temperature, high pressure refrigerant is fed in a gaseous state into a condenser (not shown) where the refrigerant liquefies by being forcedly cooled by a fan etc. of the condenser. The liquefied refrigerant is supplied to the expansion valve where it suddenly expands into high-pressure liquefied refrigerant, then turning into low-temperature, low-pressure atomized refrigerant which then flows into an evaporator. In the evaporator, the atomized refrigerant turns into gaseous refrigerant on absorbing heat from the ambient air through fins in the evaporator, and is again sucked into the compressor. In this manner, the refrigerant repeatedly undergoes refrgerating cycle whlie being circulated, thereby performing cooling function.

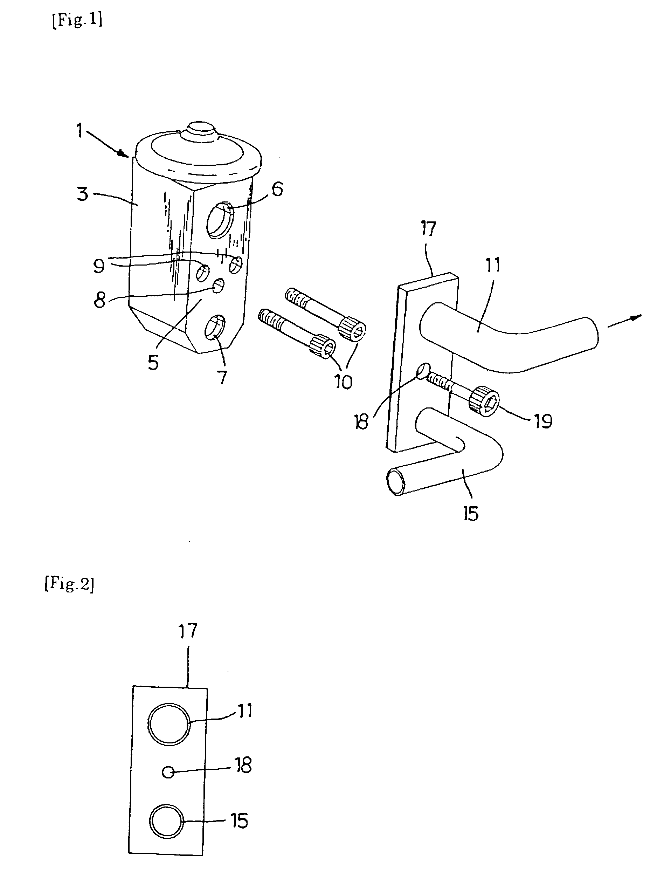

In FIG. 1 for example, a refrigerant outlet 6, to which is connected a first pipe 11 leading to the refrigerant suction side of an external compressor (not shown), is formed in an upper portion of a flat surface 5 of a front side of a housing 3 constituing an expansion valve 1. Also, a refrigerant inlet 7, to which is connected a second pipe 15 leading to the refrigerant outlet side of an external condenser (not shown), is formed in a lower portion of the flat surface 5.

To permit a plate 17, to which the ends of the two pipes are secured, to be mounted to the flat surface 5 of the housing, a threaded blind hole 8 is formed in the flat surface so that a bolt 19 inserted through a mounting hole 18 cut approximately in the center of the plate 17 may be screwed into the threaded hole. Thus, the plate 17 is mounted to the housing by the bolt 19.

In this manner, the plate 17 having the two pipes attached thereto is fixed in position by the bolt 19 inserted through the mounting hole 18 cut in the center thereof. Accordingly, if the plate is circumferentially displaced to the right or left about the small hole, the refrigerant outlet 6 and inlet 7 may possibly fail to accurtely coincide with the first and second pipes 11 and 15, respectively. The bent end portions of the two pipes must therefore be connected with accuracy to the plate 17, but this requires much labor. Since the single plate 17 is mounted at its central portion to the flat surface 5 of the expansion valve by the bolt 19, the two pipes con advantageously be connected at the same time, but the bolt may loosen with time or due to vibrations transmitted to the vehicle body from the road surface, possibly deteriorating the sealability of either of the pipes and causing leak of the refrigerant.

Through holes 9, 9 are formed in the flat surface 5 of the expansion valve in such a manner that they are located right and left above the threaded hole 8 and spaced from each other in a horizontal direction, and are used to fix the housing 3 to a frame etc. inside the hood of the vehicle.

The first pipe 11 to be connected to the refrigerant outlet 6 and the second pipe 15 corresponding in position to the refrigerant inlet 7 are fixed at their ends to the single plate 17 occupying small space, and these two pipes having the plate 17 fixed to their ends as shown in FIG. 1 can be easily connected to the expansion valve 1 insofar as they are mounted to vehicles of the same model in which parts are arranged in the same manner. However, the position at which various parts are to be mounted in the narrow space inside the hood vary depending upon the vehicle model. To permit the ends of the two pipes to be fixed to the single plate 17, therefore, the pipes may need to be curved to bypass an obstructive part, and this is sometimes extremely difficult. In view of the above circumstances, an object of the device is to increase the degree of freedom of pipe mounting by providing the ends of pipes with separate plates, without elaborately fixing two pipes to a single palte, so that the plates can be separately connected to refrigerant inlet and outlet of an expansion valve.

This device relates to a pipe connection device for a thermostatic expansion valve having a refrigerant outlet and a refrigerant inlet formed in a flat surface of a housing thereof and having a through hole formed in the flat surface for fixing the housing, which device is characterized in that: a first pipe connected to the refrigerant outlet has an end provided with a first plate having a joint surface surrounding an outer periphery thereof and with a stopper piece formed at one end of the first plate and having a small hole, a first threaded hole is formed close to the refrigerant outlet, a second pipe connected to the refrigerant inlet has an end provided with a second plate having a joint surface surrounding an outer periphery thereof and with a stopper piece formed at one end of the second plate and having a small hole, a second threaded hole is formed close to the refrigerant inlet, a mounting screw is inserted through the small hole of the first plate and screwed into the first threaded hole, and a mounting screw is inserted through the small hole of the second plate and screwed into the second threaded hole, thereby fixing and connecting the first and second plates separately to the flat surface.

With the means described above, the following advantage is obtained. Each of the pipes is provided with a plate having a joint surface surrounding the outer periphery thereof and with a stopper piece having a small hole, and the plates are separately mounted to the refrigerant outlet and inlet of the expansion valve independently of each other, whereby the reliability as to the prevention of refrigerant leak is enhanced and the pipes can be bent with increased degree of freedom.

An embodiment of the device will be now described with reference to the drawings. A first plate 21, which is formed into a desired shape such as ellipse, quadrangle, etc., is secured to an end of a first pipe 11 connected to the refrigerant suction side of an external compressor (not shown). Specifically, a joint surface 22 is provided which generally concentrically surrounds the first pipe 11 and at which the pipe is connected with increased airtightness to a flat surface 5 of a front side of the housing 3 directly or indirectly via packing.

The joint surface 22 includes at least one first stopper piece 23 protruding outward, and a first small hole 24 is formed approximately in the center of the stopper piece 23. The stopper piece 23 to be provided is not limited to one in number and may be two or three or more, but one stopper piece is preferred because of limited space.

A mounting screw 25 is inserted through the first small hole 24 and screwed into a threaded blind hole 26 cut approximately in an intermediate portion of the flat surface 5 of the housing 3. The threaded hole 26 needs not be situated on the center axis of the expansion valve and may be located at any desired position on the flat surface 5.

Further, a second plate 21a, which is formed into a desired shape such as ellipse, quadrangle, etc., is secured to an end of a second pipe 15 connected to the refrigerant outlet side of the external condenser (not shown). Specifically, a second joint surface 22a is provided which generally concentrically surrounds the second pipe 15 and at which the pipe is connected with increased airtightness to the flat surface 5 of the front side of the housing 3 directly or indirectly via packing.

The joint surface 22a includes at least one second stopper piece 23a protruding outward, and a second small hole 24a is formed approximately in the center of the stopper piece. The stopper piece 23a to be provided is not limited to one in number and may be two or three or more, but one stopper piece is preferred because of limited space.

A mounting screw 25 is inserted through the second small hole 24a and screwed into a second threaded hole 26a cut in the flat surface 5 of the housing at a location close to the refrigerant inlet 7. The threaded hole 26a may be located at any desired position on the flat surface 5, but preferabily it is located as close to the refrigerant inlet as possible.

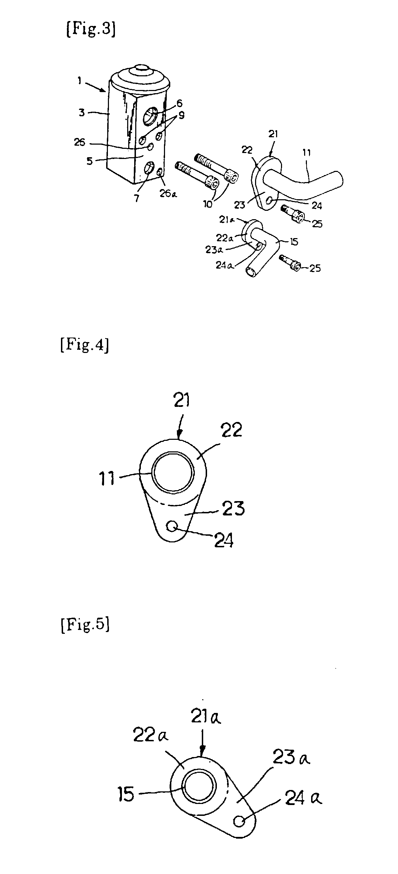

In the figures, identical reference numerals denote identical elements. The device according to the embodiment is similar in basic construction to the conventional device shown in FIG.1 and is characterized in that the ends of the two pipes 11 and 15 are provided with separate plates 21 and 21a, as shown in FIG. 3.

The operation of the embodiment will be now described. To allow an automotive cooling system to be constructed in a limited small space inside the hood, the first and second pipes 11 and 15, which are to be connected to the flat surface 5 of the housing 3 fixed to a frame or the like and constituing the expansion valve, have respective ends formed integrally with plates 21 and 21a, respectively, having joint surfaces 22 and 22a surrounding the outer peripheries of the ends of the corresponding pipes to ensure the least requisite area of plane contact with the flat surface, and also with stopper pieces 23 and 23a, respectively, having small holes for fixing the corresponding plates.

Namely, each plate 21 includes a stopper piece having at least one small hole 24 formed therein, and the plates are individually securely connected to the flat surface 5 by means of the mounting screws 25 inserted through the respective small holes. Thus, unlike the conventional device, two pipes are not simultaneously sealed by means of one mounting screw, and accordingly, the sealability can be greatly improved.

Also, even in cases where, because of change of the vehicle model, for example, an obstructive part exists between the expansion valve arranged inside the hood and a pipe to be connected thereto, the pipe may be bent or curved to bypass the obstructive part, so that the plate to which an end of the pipe is fixed can be securely connected by means of a mounting bolt.

The pipe holding device for a thermostatic expansion valve according to this device is not limited to the embodiment shown in the drawings, and various modifications can of course be made without departing from the scope of the device.

According to this device, the first and second pipes are respctively connected to the refrigerant outlet and inlet independently of each other, and accordingly, deterioration in the sealability of one pipe does not affect the sealability of the other. Consequently, the sealability can be greatly improved, thereby enhnacing the reliability as to the prevention of refrigerant leak.

To permit the pipes to be fixed to the refrigerant outlet and inlet, respectively, of the expansion valve, a small hole is formed in each of the frames affixed to the ends of the respective pipes and threaded holes are formed such that mounting screwes inserted through the respective small holes are screwed therein. The small holes and the threaded holes associated therewith are shifted from the center axis of the expansion valve so that the distance between the refrigerant inlet and corresponding small hole and between the refrigerant outlet and corresponding small hole may be small, thereby making it possible to further reduce the sizes of the frames.
FIG. 1: An exploded perspective view showing the connections of pipes to a conventional expansion valve.
FIG. 2: A front view of a plate.
FIG. 3: An exploded perspective view showing the connections of pipes to an expansion valve according to the device.
FIG. 4: A front view of a first frame.
FIG. 5: A front view of a second frame.

## Claims

1. A pipe connection device for a thermostatic expansion valve having a refrigerant outlet and a refrigerant inlet formed in a flat surface of a housing thereof and having a through hole formed in the flat surface for fixing the housing, characterized in that
a first pipe connected to the refrigerant outlet has an end provided with a first plate having a joint surface surrounding an outer periphery thereof and with a stopper piece formed at one end of the first plate and having a small hole, a first threaded hole is formed close to the refrigerant outlet,
a second pipe connected to the refrigerant inlet has an end provided with a second plate having a joint surface surrounding an outer periphery thereof and with a stopper piece formed at one end of the second plate and having a small hole, a second threaded hole is formed close to the refrigerant inlet,
a mounting screw is inserted through the small hole of the first plate and screwed into the first threaded hole, and a mounting screw is inserted through the small hole of the second plate and screwed into the second threaded hole, thereby fixing and connecting the first and second plates separately to the flat surface.
